# EUROPÄISCHE PATENTSCHRIFT

(11) **EP 2 898 322 B1**
(45) Veröffentlichungstag und Bekanntmachung des Hinweises auf die Patenterteilung: **26.12.2018**
(21) Anmeldenummer: 13786194.4
(22) Anmeldetag: 23.10.2013
(51) Int. Cl.: G01N 29/22

(54) **VERFAHREN UND VORRICHTUNG ZUR VERBESSERUNG DER SAFT-ANALYSE BEI UNREGELMÄSSIGER LOKALER MESSDICHTE**
METHOD AND DEVICE FOR IMPROVING THE SAFT ANALYSIS IN CASE OF IRREGULAR LOCAL MEASUREMENT DENSITY
PROCÉDÉ ET DISPOSITIF D'AMÉLIORATION D'UNE ANALYSE SAFT EN CAS DE DENSITÉ DE MESURES LOCALE IRRÉGULIÈRE

(30) Priorität: 07.02.2013 DE 102013201975
(43) Veröffentlichungstag der Anmeldung: 29.07.2015
(73) Patentinhaber: Siemens Aktiengesellschaft, 80333 München (DE)
(72) Erfinder: MOOSHOFER, Hubert, 80538 München (DE)
(86) Internationale Anmeldenummer: PCT/EP2013/072181
(87) Internationale Veröffentlichungsnummer: WO 2014/121858

(56) Entgegenhaltungen:
- DE-A1-102009 050 160
- US-A- 5 278 757
- US-A1- 2012 296 215

## Beschreibung

Die Erfindung betrifft ein Verfahren sowie eine Vorrichtung zur Ultraschallprüfung eines Prüfobjekts der in den Oberbegriffen der unabhängigen Patentansprüche angegebenen Art.

Zur zerstörungsfreien Prüfung von Prüfobjekten sind unterschiedlichste Ultraschallprüfverfahren bekannt. Zur besseren Lokalisierung und Trennung von Defekten bei der zerstörungsfreien Prüfung mit Ultraschall ist die Analysetechnik SAFT (Synthetic Aperture Focusing Technique) bekannt. Die Inspektion erfolgt dabei wie bei einer klassischen Ultraschallprüfung, jedoch werden die Daten ohne eine Gleichrichtung aufgezeichnet. Bei der anschließenden Analyse der Messdaten werden Amplitudensummen aus einer Vielzahl von Messsignalen für jeweilige kleine Volumenelemente, welche auch als sogenannte Voxel bezeichnet werden, ermittelt. Die Ultraschallprüfung kann unter Zuhilfenahme der SAFT-Analyse beispielsweise bei einer manuellen Bewegung eines die Ultraschallimpulse aussendenden und die korrespondierenden Echosignale empfangenden Prüfkopfes eingesetzt werden. Eine derartige SAFT-Prüfung ist beispielsweise in der DE 10 2013 200974.7 beschrieben.

Durch den Einsatz von sogenannten Phased-Array-Prüfköpfen können Prüfobjekte nicht nur mechanisch sondern auch elektronisch gescannt werden, d. h. dass durch eine Art elektronisches Verschieben der aktiven Zone des Prüfkopfes mehrere Messungen in einem definierten Raster durchgeführt werden. Bei einem stationären Prüfkopf können Daten, die mit demselben elektronischen Scan aufgenommen wurden, mit der SAFT-Analyse ausgewertet werden. Dies funktioniert sowohl bei unbewegtem Prüfkopf als auch bei während des elektronischen Scans bewegten Prüfkopf, wenn die exakte Sende- und Empfangsposition sowie Einschallwinkel und Fokussierung zum Rekonstruktionszeitpunkt bekannt sind.

Die DE 10 2009 050 160 A1 offenbart ein Verfahren und eine Vorrichtung zur Ultraschallprüfung eines Prüfobjektes, bei dem Ultraschallwellen über eine Oberfläche des Prüfobjektes in das Prüfobjekt eingekoppelt werden.

Es ist die Aufgabe der vorliegenden Erfindung, eine verbesserte, insbesondere freihandgeführte Ultraschallprüfung eines Prüfobjekts unter Zuhilfenahme der SAFT-Analyse zu ermöglichen. Insbesondere sollen bei einer manuellen freien Führung eines Prüfkopfes erzeugte Artefakte oder Messfehler bei der SAFT-Auswertung wirksam verkleinert oder entfernt werden.

Die Aufgabe wird durch ein Verfahren gemäß dem Anspruch 1 und eine Vorrichtung gemäß dem Anspruch 10 gelöst. Das erfindungsgemäße Verfahren zur Ultraschallprüfung eines Prüfkobjekts umfasst die folgenden Schritte: Bewegen eines Prüfobjekts entlang einer Prüfobjektoberfläche und Aussenden von Ultraschallimpulsen in das Prüfobjekt mittels des Prüfkopfes; Empfangen jeweiliger mit den ausgesendeten Ultraschallimpulsen korrespondierender Echosignale mittels des Prüfkopfes; Erstellen einer Abbildung eines vorgegebenen Prüfbereichs des Prüfobjekts basierend auf einer Überlagerung und Mittelung von Amplitudenwerten der empfangenen Echosignale mittels einer Datenverarbeitungseinrichtung. Mit anderen Worten umfasst das erfindungsgemäße Verfahren zur Ultraschallprüfung eines Prüfobjekts die bei einer SAFT-Analyse erforderlichen Schritte, wobei zusätzlich die jeweiligen Positionen des Prüfkopfes bei Aussenden der Ultraschallsignale und/oder bei Empfangen der korrespondierenden Echosignale mittels einer Erfassungseinrichtung erfasst und die jeweils erfassten Positionen des Prüfkopfes beim Erzeugen der Abbildung des Prüfbereichs des Prüfobjektes berücksichtigt werden.

Gemäß einem ersten Aspekt erfolgt ein manuelles Bewegen eines frei geführten Prüfkopfes entlang einer Prüfobjektsoberfläche und innerhalb einer aus Teilbereichen bestehenden Messfläche ausgeführtes Messen mittels Aussenden von Ultraschallimpulsen in das Prüfobjekt mittels des Prüfkopfes und Empfangen jeweiliger mit den ausgesendeten Ultraschallimpulsen korrespondierender Echosignale mittels des Prüfkopfes; Erstellen einer Abbildung eines vorgegebenen Prüfbereichs des Prüfobjekts basierend auf einer Überlagerung und Mittelung von Amplitudenwerten der empfangenen Echosignale mittels einer Datenverarbeitungseinrichtung; Erfassen einer jeweiligen Messposition des Prüfkopfes mittels einer Erfassungseinrichtung; Berücksichtigen der jeweils erfassten Messpositionen des Prüfkopfes beim Erzeugen der Abbildung des Prüfbereichs des Prüfobjekts; Bestimmen einer Bewertungsgröße zur Erfassung von Unregelmäßigkeiten hinsichtlich der jeweils erfassten Messpositionen innerhalb der Messfläche mittels der Datenverarbeitungseinrichtung; anhand der Bewertungsgröße ausgeführtes Gewichten jedes zu der jeweils erfassten Messposition empfangenen Echosignals für das Erstellen der Abbildung (5) mittels der Datenverarbeitungseinrichtung derart, dass die Unregelmäßigkeiten ausgeglichen werden.

Gemäß einem zweiten Aspekt wird eine Vorrichtung zur Ultraschallprüfung eines Prüfobjekts vorgeschlagen, aufweisend: einen Prüfkopf, der entlang einer Prüfobjektsoberfläche und innerhalb einer aus Teilbereichen bestehenden Messfläche manuell frei bewegbar ist und mittels Aussenden von Ultraschallimpulsen in das Prüfobjekt und Empfangen jeweiliger mit den ausgesendeten Ultraschallimpulsen korrespondierender Echosignale misst; eine Erfassungseinrichtung, die eine jeweilige Messposition des Prüfkopfes erfasst; eine Datenverarbeitungseinrichtung, die eine Abbildung eines vorgegebenen Prüfbereichs des Prüfobjekts basierend auf einer Überlagerung und Mittelung von Amplitudenwerten der empfangenen Echosignale erstellt; und die jeweils erfassten Messpositionen des Prüfkopfes beim Erzeugen der Abbildung des Prüfbereichs des Prüfobjekts berücksichtigt; wobei die Datenverarbeitungseinrichtung mittels mindestens einer Bewertungsgröße zur Erfassung von Unregelmäßigkeiten hinsichtlich der jeweils erfassten Messpositionen innerhalb der Messfläche jedes zu der jeweils erfassten Messposition empfangene Echosignal für das Erstellen der Abbildung derart gewichtet, dass die Unregelmäßigkeiten ausgeglichen werden.

Erfindungsgemäß ist erkannt worden, dass bei einer manuellen Führung ein Prüfkopf nicht präzise geführt wird und Messungen in einem schwankenden Raster beziehungsweise entlang krummer Bahnen ausgeführt werden, so dass auf diese Weise Artefakte erzeugt werden. Um Artefakte zu reduzieren soll ein Echosignal zu jedem Messpunkt nicht direkt zur SAFT-Auswertung verwendet werden. Echosignale sollen entsprechend einer Dichte und Verteilung von Messpunkten auf einer Messfläche so ausgewählt und/oder gewichtet werden, dass alle Teile der Messfläche zu jedem rekonstruierten Voxel beziehungsweise Prüfbereichs des Prüfobjekts möglichst gleichmäßig beitragen. Voraussetzung ist dabei, dass zuverlässige Positionsinformationen für jede einzelne Messung zur Verfügung stehen.

Die erfindungsgemäße Lösung bewirkt eine verbesserte SAFT-Auswertung von Prüfungen mit freihändig geführtem Prüfkopf. Ebenso können Artefakte wirksam verringert und ein Signal-zu-Rausch-Abstand SNR des SAFT-Ergebnisses wirksam vergrößert werden. Es können ebenso Unregelmäßigkeiten ausgeglichen werden, deren Ursachen nicht in der Freihandführung des Prüfkopf liegen, sondern beispielsweise durch Ankoppelschwankungen verursacht sind.

Erfindungsgemäß wird eine lokale Messdichte als Bewertungsgröße bestimmt und ein Gewichten erfolgt derart, dass Echosignale von Messpositionen mit großer lokaler Messdichte weniger stark gewichtet werden, als Echosignale von Messpositionen mit durchschnittlicher oder kleiner Messdichte.

Gemäß einer vorteilhaften Ausgestaltung kann ein Bestimmen der lokalen Messdichte aus einer jeweiligen Anzahl von erfassten Messpositionen je Einheitsfläche der Messfläche oder je Einheitslänge mindestens einer Abtastlinie der Messfläche erfolgen.

Gemäß einer weiteren vorteilhaften Ausgestaltung kann ein Gewichten derart erfolgen, dass Echosignale von Messpositionen umgekehrt proportional zur lokalen Messdichte gewichtet werden.

Gemäß einer weiteren vorteilhaften Ausgestaltung kann die lokale Messdichte mittels Summieren aller Kehrwerte aller Abstände einer erfassten Messposition zu allen anderen erfassten Messpositionen innerhalb eines vorgegebenen ersten Radius bestimmt werden.

Gemäß einer weiteren vorteilhaften Ausgestaltung kann ein Gewichten derart erfolgen, dass Echosignale von Messpositionen mit relativ größter lokaler Messdichte mit Null gewichtet werden.

Gemäß einer weiteren vorteilhaften Ausgestaltung kann ein erneutes Bestimmen der lokalen Messdichte innerhalb eines vorgegebenen zweiten Radius um die Messpositionen erfolgen, deren Echosignale mit Null gewichtet wurden.

Gemäß einer weiteren vorteilhaften Ausgestaltung kann ein wiederholtes Weglassen mit Null gewichteter Messpositionen und erneutes Bestimmen der lokalen Messdichte erfolgen, solange eine vorgegebene Mindestmessdichte nicht unterschritten wird.

Gemäß einer weiteren vorteilhaften Ausgestaltung kann ein Bestimmen eines homogenen Beitrags aller Teilbereiche der Messfläche als Bewertungsgröße und Gewichten derart erfolgen, dass die Echosignale von Messpositionen möglichst gleichmäßig zur Abbildung beitragen.

Gemäß einer weiteren vorteilhaften Ausgestaltung kann ein Erfassen der jeweiligen Messposition des Prüfkopfes bei Aussenden des Ultraschallsignals und/oder bei Empfangen des korrespondierenden Echosignals erfolgen.

Die Erfindung wird anhand von Ausführungsbeispielen in Verbindung mit den Figuren näher beschreiben. Es zeigen:
- Fig. 1: ein Ausführungsbeispiel einer erfindungsgemäßen Vorrichtung;
- Fig. 2: eine beispielhafte Prüfkopfbewegung über eine Messfläche im Rahmen der Prüfdurchführung;
- Fig. 3: ein Ausführungsbeispiel eines erfindungsgemäßen Verfahrens.

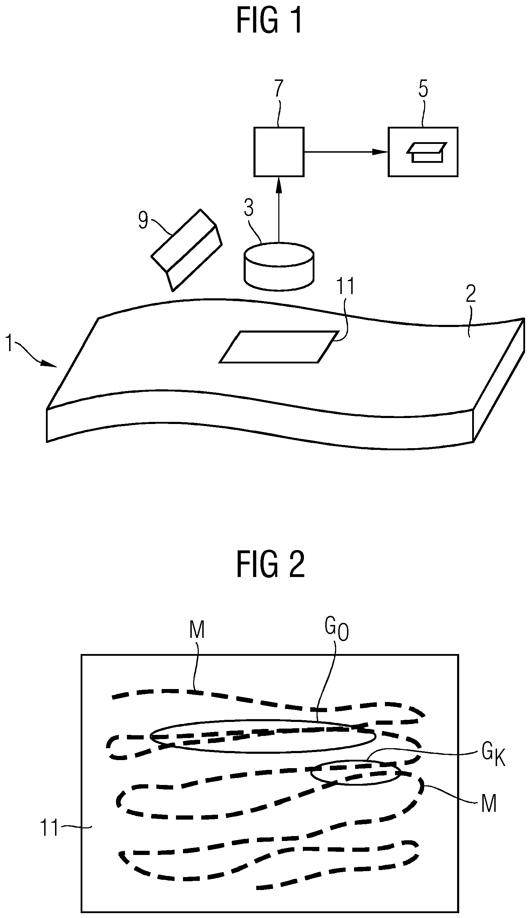

Fig. 1 zeigt ein erstes Ausführungsbeispiel einer erfindungsgemäßen Vorrichtung, wobei die Position eines Prüfkopfes 3 auf einer Oberfläche 2 eines Prüfobjekts 1 während der Dauer der Prüfung gemessen wird. Die Messung der jeweiligen Position erfolgt dabei innerhalb vergleichsweise kurzer Intervalle und mit einem definierten Zeitbezug relativ zu den zur Inspektion des Prüfobjekts 1 ausgesandten Ultraschallimpulsen. Vorzugsweise erfolgt die Positionsmessung mittels einer Erfassungseinrichtung 9 jeweils dann, wenn ein Ultraschallimpuls ausgesendet wird. Zusätzlich kann auch noch jeweils eine Positionsmessung erfolgen, wenn das zu dem ausgesendeten Ultraschallimpuls korrespondierende Echosignal empfangen wird.

In Abhängigkeit von den erfassten bzw. gemessenen jeweiligen Positionen des Prüfkopfes 3 wird eine jeweils momentane Position des Prüfkopfes 3, vorzugsweise zum Zeitpunkt eines jeweiligen Aussendens des Ultraschallimpulses, ermittelt und bei der SAFT-Analyse zur Bestimmung eines Abstandes zwischen einem zu rekonstruierenden Voxel und der tatsächlichen Messposition verwendet.

Die erfindungsgemäße Vorrichtung und das Verfahren zur Ultraschallprüfung eines Prüfobjekts sollen unter Zuhilfenahme der SAFT-Analyse bei bewegtem, insbesondere bei freihandgeführtem, Prüfkopf 3 angewendet werden. Vorzugsweise kann der Prüfkopf 3 dabei manuell entlang der Prüfobjektoberfläche 2 bewegt werden. Insbesondere kann der Prüfkopf 3 bei dem erfindungemäßen Verfahren frei auf der Prüfobjektoberfläche 2 geführt werden. Die Lokalisation von Defekten innerhalb des Prüfobjekts 1 wird durch das Verfahren erheblich verbessert, wobei einzelne Defekte besser voneinander unterschieden und das Signalrauschverhältnis insbesondere bei einer manuellen, insbesondere bei einer freihandgeführten Prüfung, verbessert wird. Dadurch ergibt sich bei der Erstellung der Abbildung 5 des Prüfbereichs des Prüfobjekts 1 eine verbesserte Auflösung von Gruppenanzeigen, also von nahe beieinander liegenden Einzelanzeigen, die ohne eine SAFT-Analyse nicht voneinander getrennt werden könnten und daher als eine größere Anzeige bewertet werden würden, und insbesondere eine verbesserte Detektion von kleinen Defekten. Unter kleinen Defekten sind dabei Defekte mit einer Abmessung zu verstehen, welche im Verhältnis zur verwendeten Wellenlänge der Ultraschallimpulse klein sind. Zudem können die Prüfergebnisse 5, welche mit dem erfindungsgemäßen Verfahren erzielt werden, durch eine Referenzierung zu einem dreidimensionalen digitalen Modell des Prüfobjekts besonders intuitiv interpretiert werden.

Es kann aus den gemessenen Positionen und Orientierungen und dem jeweiligen Zeitbezug die momentane Position und Orientierung des Prüfkopfes 3 zum Zeitpunkt jedes Ultraschallimpulses berechnet und bei der sogenannten SAFT-Analyse zur Bestimmung des Abstandes zwischen rekonstruiertem jeweiligen Voxel und Messposition benutzt werden. Dabei kann anhand der erfassten Position und Orientierung des Prüfkopfes 3 die Mittenposition der aktiven Apertur des Prüfkopfes beim Aussenden der Ultraschallsignale ermittelt und beim Erzeugen der Abbildung des Prüfbereichs des Prüfobjekts 1 berücksichtigt werden. Unter der aktiven Apertur ist dabei der Teil des Prüfkopfes 3 zu verstehen, welcher als wirksame Sende- bzw. Empfangsfläche dient. Ein räumlicher Versatz zwischen der jeweiligen Positionsmessung und der Position des Prüfkopfes 3 kann mit Hilfe der erfassten Information über die Prüfkopforientierung herausgerechnet werden.

In vorteilhafter Ausgestaltung der Vorrichtung kann es vorgesehen sein, dass die Erfassungseinrichtung 9 einen optischen Bewegungssensor umfasst, welcher an dem Prüfkopf 3 angebracht ist, und mittels welchem die jeweils relative Position zu einem Referenzpunkt erfassbar ist. Bei dem Referenzpunkt kann es sich beispielsweise um die Position handeln, an welcher der Prüfkopf 3 zu Beginn der Ultraschallprüfung angeordnet worden ist. Vorzugsweise umfasst die Erfassungseinrichtung 9 dabei einen weiteren nicht dargestellten optischen Bewegungssensor, welcher mit einem vorgegebenen Abstand entfernt von dem anderen optischen Bewegungssensor an dem Prüfkopf 3 angebracht ist und mittels welchem die jeweils relative Position zu dem Referenzpunkt erfassbar ist.

In weiterer vorteilhafter Ausgestaltung der Vorrichtung kann es vorgesehen sein, dass die Erfassungseinrichtung 9 eine Bilderfassungseinrichtung umfasst, mittels welcher eine Mehrzahl von am Prüfkopf 3 angebrachten optischen Markierungen erfassbar und basierend darauf die Position und Orientierung des Prüfkopfes 3 ermittelbar sind.

Eine Vorrichtung zur Ultraschallprüfung eines Prüfobjekts 1 ist in einer schematischen Perspektivansicht gezeigt. Die Vorrichutng umfasst einen entlang einer Prüfobjektoberfläche 2 freihändisch bewegbaren Prüfkopf 3 mittels welchem Ultraschallimpulse in das Prüfobjekt 1 aussendbar und jeweilige mit den ausgesendeten Ultraschallimpulsen korrespondierende Echosignale empfangbar sind. Die Vorrichtung umfasst des Weiteren eine Datenverarbeitungseinrichtung 7, mittels welcher eine Abbildung 5 eines Prüfbereichs des Prüfobjekts 1 basierend auf einer Überlagerung und Mittlung von Amplitudenwerten der empfangenen Echosignale erstellbar ist. Mit anderen Worten ist die Vorrichtung zur Ultraschallprüfung des Prüfobjekts 1 dazu ausgelegt, eine sogenannte SAFT-Analyse (Syntetic Aperture Focusing Technique) im Rahmen der Ultraschallprüfung des Prüfobjekts 1 durchzuführen.

Fig. 1 zeigt die Datenverarbeitungseinrichtung 7, die eine Abbildung 5) eines vorgegebenen Prüfbereichs des Prüfobjekts 1 basierend auf einer Überlagerung und Mittelung von Amplitudenwerten der empfangenen Echosignale erstellt; und die jeweils erfassten Messpositionen des Prüfkopfes 3 beim Erzeugen der Abbildung 5 des Prüfbereichs des Prüfobjekts 1 berücksichtigt. Die Datenverarbeitungseinrichtung 7 gewichtet mittels mindestens einer Bewertungsgröße zur Erfassung von Unregelmäßigkeiten hinsichtlich der jeweils erfassten Messpositionen innerhalb der Messfläche jedes zu der jeweils erfassten Messposition empfangene Echosignal für das Erstellen der Abbildung 5 derart, dass die Unregelmäßigkeiten ausgeglichen werden. Der Prüfkopf 3 misst das Prüfobjekt 1 innerhalb einer definierten Messfläche 11. Die Messfläche 11 kann beispielsweise eine ebene Rechteckefläche sein.

Fig. 2 zeigt ein Ausführungsbeispiel einer Messfläche 11 auf der Messpositionen M dargestellt sind. Messpunkte oder Messlinienabschnitte sind hier entlang einer mäanderförmigen Abtastlinie oder Scanlinie dargestellt. Entlang dieser Linie ist eine freihandgeführte Bewegung des Prüfkopfes ersichtlich. Es ergeben sich an den umrahmten Teilbereichen bzw. Flächen Überdeckungen der Messung und von Messpositionen M. Auf diese Weise sind Verteilungen von Messpositionen M einfach ersichtlich und Dichtewerte können abgeschätzt werden. Entsprechend ist eine lokale Messdichte, die ebenso als lokale Schussdichte bezeichnet werden kann, dargestellt. Um durch zu hohe Schussdichten verursachte Unregelmäßigkeiten zu kompensieren wird nun vorgeschlagen, Echosignale von Messpositionen M mit großer lokaler Messdichte weniger zu berücksichtigen als Echosignale von Messpositionen M mit durchschnittlicher oder kleiner Messdichte. Dies kann dazu führen, dass beispielsweise Echosignale aus dem Bereich oder Teilbereich G0 mit der Zahl Null gewichtet und damit vollständig zur Erzeugung einer Abbildung entfernt werden. Da die relative lokale Messdichte im Teilbereich Gk zwar groß, aber kleiner als im Teilbereich G0 ist, ist es vorteilhaft beispielsweise dortige Echosignale für die Abbildung abzuschwächen und kleiner als 100% zu gewichten. Die genaue Auswahl der Gewichtungsfaktoren kann experimentell oder mathematisch bestimmt erfolgen.

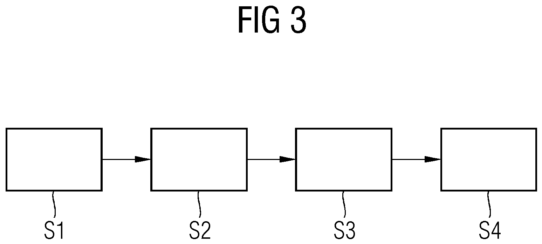

Fig. 3 zeigt ein Ausführungsbeispiel eines erfindungsgemäßen Verfahrens. Zur Ultraschallprüfung eines Prüfobjekts können beispielsweise folgende Schritte ausgeführt werden. Mit einem Schritt S1 erfolgt ein Bewegen - insbesondere freihändig - eines Prüfkopfes entlang einer Prüfobjektsoberfläche und ein innerhalb einer aus Teilbereichen bestehenden Messfläche ausgeführtes gleichzeitiges Messen mittels Aussenden von Ultraschallimpulsen in das Prüfobjekt mittels des Prüfkopfes und Empfangen jeweiliger mit den ausgesendeten Ultraschallimpulsen korrespondierender Echosignale mittels des Prüfkopfes. Mit einem Schritt S3 erfolgt ein Erstellen einer Abbildung eines vorgegebenen Prüfbereichs des Prüfobjekts basierend auf einer Überlagerung und Mittelung von Amplitudenwerten der empfangenen Echosignale mittels einer Datenverarbeitungseinrichtung unter Berücksichtigung der jeweils erfassten Messpositionen des Prüfkopfes beim Erzeugen der Abbildung des Prüfbereichs des Prüfobjekts, wobei das Erfassen einer jeweiligen Messposition des Prüfkopfes mittels einer Erfassungseinrichtung in einem Schritt S2 ausgeführt wird. Mit einem vierten Schritt S4 anhand einer Bewertungsgröße zur Erfassung von Unregelmäßigkeiten hinsichtlich der jeweils erfassten Messpositionen innerhalb der Messfläche ein Gewichten jedes zu der jeweils erfassten Messposition empfangenen Echosignals für das Erstellen der Abbildung mittels der Datenverarbeitungseinrichtung derart ausgeführt, dass die Unregelmäßigkeiten ausgeglichen werden.

Mittels der Vorrichtung und den beschriebenen Verfahren zur Ultraschallüberprüfung eines Prüfobjekts 1 kann das an und für sich bekannte SAFT-Verfahren auch bei einer manuellen Führung eines Prüfkopfes auf zuverlässige Weise angewendet werden, indem wie in der erläuterten Weise eine Positions- und Orientierungserfassung des Prüfkopfes 3 während der Ultraschallprüfung des Prüfobjekts 1 durchgeführt und bei der Erstellung einer Abbildung 5 eines zu überprüfenden Bereichs des Prüfobjekts 1 berücksichtigt wird.

## Patentansprüche

1. Verfahren zur Ultraschallprüfung eines Prüfobjekts (1), mit den Schritten:
- Bewegen - insbesondere freihändig - eines Prüfkopfes (3) entlang einer Prüfobjektsoberfläche (2) und innerhalb einer aus Teilbereichen bestehenden Messfläche (11) ausgeführtes Messen mittels Aussenden von Ultraschallimpulsen in das Prüfobjekt (1) mittels des Prüfkopfes (3) und Empfangen jeweiliger mit den ausgesendeten Ultraschallimpulsen korrespondierender Echosignale mittels des Prüfkopfes (3);
- Erstellen einer Abbildung (5) eines vorgegebenen Prüfbereichs des Prüfobjekts (1) basierend auf einer Überlagerung und Mittelung von Amplitudenwerten der empfangenen Echosignale mittels einer Datenverarbeitungseinrichtung (7);
- Erfassen einer jeweiligen Messposition (M) des Prüfkopfes (3) mittels einer Erfassungseinrichtung (9);
- Berücksichtigen der jeweils erfassten Messpositionen des Prüfkopfes (3) beim Erzeugen der Abbildung (5) des Prüfbereichs des Prüfobjekts (1);
- Bestimmen einer Bewertungsgröße zur Erfassung von Unregelmäßigkeiten hinsichtlich der jeweils erfassten Messpositionen innerhalb der Messfläche mittels der Datenverarbeitungseinrichtung (7);
- anhand der Bewertungsgröße ausgeführtes Gewichten jedes zu der jeweils erfassten Messposition empfangenen Echosignals für das Erstellen der Abbildung (5) mittels der Datenverarbeitungseinrichtung (7) derart, dass die Unregelmäßigkeiten ausgeglichen werden,
**gekennzeichnet durch**
Bestimmen einer lokalen Messdichte als Bewertungsgröße und Gewichten derart, dass Echosignale von Messpositionen (M) mit großer lokaler Messdichte weniger stark gewichtet werden, als Echosignale von Messpositionen mit durchschnittlicher oder kleiner Messdichte.

2. Verfahren nach Anspruch 1,
**gekennzeichnet durch**
Bestimmen der lokalen Messdichte aus einer jeweiligen Anzahl von erfassten Messpositionen je Einheitsfläche der Messfläche oder je Einheitslänge mindestens einer Abtastlinie der Messfläche.

3. Verfahren nach Anspruch 1,
**gekennzeichnet durch**
Bestimmen der lokalen Messdichte mittels Summieren aller Kehrwerte aller Abstände einer erfassten Messposition zu allen anderen erfassten Messpositionen innerhalb eines vorgegebenen ersten Radius.

4. Verfahren nach Anspruch 1, 2 oder 3,
**gekennzeichnet durch**
Gewichten derart, dass Echosignale von Messpositionen umgekehrt proportional zur lokalen Messdichte gewichte werden.

5. Verfahren nach Anspruch 1, 2, 3 oder 4,
**gekennzeichnet durch**
Gewichten derart, dass Echosignale von Messpositionen mit relativ größter lokaler Messdichte mit Null gewichtet werden.

6. Verfahren nach Anspruch 5,
**gekennzeichnet durch**
erneutes Bestimmen der lokalen Messdichte innerhalb eines vorgegebenen zweiten Radius um die Messpositionen, deren Echosignale mit Null gewichtet wurden.

7. Verfahren nach Anspruch 5 und 6,
**gekennzeichnet durch**
wiederholtes Weglassen mit Null gewichteter Messpositionen und erneutes Bestimmen der lokalen Messdichte solange eine vorgegebene Mindestmessdichte nicht unterschritten wird.

8. Verfahren nach einem der vorhergehenden Ansprüche,
**gekennzeichnet durch**
Bestimmen eines homogenen Beitrags aller Teilbereiche der Messfläche als Bewertungsgröße und Gewichten derart, dass die Echosignale von Messpositionen möglichst gleichmäßig zur Abbildung (5) beitragen.

9. Verfahren nach einem der vorhergehenden Ansprüche,
**gekennzeichnet durch**
Erfassen der jeweiligen Messposition des Prüfkopfes (16) bei Aussenden des Ultraschallsignals und/oder bei Empfangen des korrespondierenden Echosignals.

10. Vorrichtung zur Ultraschallprüfung eines Prüfobjekts (1), aufweisend:
einen Prüfkopf (3), der entlang einer Prüfobjektsoberfläche (2) und innerhalb einer aus Teilbereichen bestehenden Messfläche, insbesondere freihändig, bewegbar ist und mittels Aussenden von Ultraschallimpulsen in das Prüfobjekt (1) und Empfangen jeweiliger mit den ausgesendeten Ultraschallimpulsen korrespondierender Echosignale misst;
eine Erfassungseinrichtung, die eine jeweilige Messposition des Prüfkopfes (3) erfasst;
eine Datenverarbeitungseinrichtung (7), die eine Abbildung (5) eines vorgegebenen Prüfbereichs des Prüfobjekts (1) basierend auf einer Überlagerung und Mittelung von Amplitudenwerten der empfangenen Echosignale erstellt;
und die jeweils erfassten Messpositionen des Prüfkopfes (3) beim Erzeugen der Abbildung (5) des Prüfbereichs des Prüfobjekts (1) berücksichtigt;
wobei die Datenverarbeitungseinrichtung (7) mittels mindestens einer Bewertungsgröße zur Erfassung von Unregelmäßigkeiten hinsichtlich der jeweils erfassten Messpositionen innerhalb der Messfläche jedes zu der jeweils erfassten Messposition empfangene Echosignal für das Erstellen der Abbildung (5) derart gewichtet, dass die Unregelmäßigkeiten ausgeglichen werden
**dadurch gekennzeichnet, dass**
die Datenverarbeitungseinrichtung (7) eine lokale Messdichte als Bewertungsgröße bestimmt und ein Gewichten derart ausführt, dass Echosignale von Messpositionen (M) mit großer lokaler Messdichte weniger stark gewichtet werden, als Echosignale von Messpositionen mit durchschnittlicher oder kleiner Messdichte.

11. Vorrichtung nach Anspruch 10,
**dadurch gekennzeichnet, dass**
die Datenverarbeitungseinrichtung (7) die lokale Messdichte aus einer jeweiligen Anzahl von erfassten Messpositionen je Einheitsfläche der Messfläche oder je Einheitslänge mindestens einer Abtastlinie der Messfläche bestimmt.

12. Vorrichtung nach einem der Ansprüche 10 oder 11,
**dadurch gekennzeichnet, dass**
die Datenverarbeitungseinrichtung (7) die lokale Messdichte mittels Summieren aller Kehrwerte aller Abstände einer erfassten Messposition zu allen anderen erfassten Messpositionen innerhalb eines vorgegebenen ersten Radius bestimmt.

13. Vorrichtung nach Anspruch 10, 11 oder 12,
**dadurch gekennzeichnet, dass**
die Datenverarbeitungseinrichtung (7) derart gewichtet, dass Echosignale von Messpositionen umgekehrt proportional zur lokalen Messdichte gewichtet werden.

14. Vorrichtung nach Anspruch 10, 11, 12 oder 13,
**dadurch gekennzeichnet, dass**
die Datenverarbeitungseinrichtung (7) derart gewichtet, dass Echosignale von Messpositionen mit relativ größter lokaler Messdichte mit Null gewichtet werden.

15. Vorrichtung nach Anspruch 14,
**dadurch gekennzeichnet, dass**
die Datenverarbeitungseinrichtung (7) die lokale Messdichte innerhalb eines vorgegebenen zweiten Radius um die Messpositionen, deren Echosignale mit Null gewichtet wurden, erneut bestimmt.

16. Vorrichtung nach Anspruch 14 und 15,
**dadurch gekennzeichnet, dass**
die Datenverarbeitungseinrichtung (7) mit Null gewichtete Messpositionen entfernt und die lokale Messdichte, solange eine vorgegebene Mindestmessdichte nicht unterschritten wird, erneut bestimmt.

17. Vorrichtung nach einem der vorhergehenden Ansprüche 9 bis 16,
**dadurch gekennzeichnet, dass**
die Datenverarbeitungseinrichtung (7) eine homogenen Beitrag aller Teilbereiche der Messfläche als Bewertungsgröße bestimmt und derart gewichtet, dass die Echosignale von Messpositionen möglichst gleichmäßig zur Abbildung (5) beitragen.

18. Vorrichtung nach einem der vorhergehenden Ansprüche 10 bis 17,
**dadurch gekennzeichnet, dass**
die Erfassungseinrichtung die jeweiligen Messposition des Prüfkopfes (16) bei Aussenden des Ultraschallsignals und/oder bei Empfangen des korrespondierenden Echosignals erfasst.

## Claims

1. Method for ultrasonic testing of a test object (1), having the steps of:
- moving - in particular in freehand fashion - a probe (3) along a test object surface (2), and executing measurements within a measurement surface (11) comprising subareas by means of emitting ultrasonic pulses into the test object (1) by means of the probe (3) and receiving respective echo signals corresponding to the emitted ultrasonic pulses by means of the probe (3);
- producing a picture (5) of a prescribed test area of the test object (1) on the basis of superposing and averaging amplitude values of the received echo signals by means of a data processing device (7);
- detecting a respective measurement position (M) of the probe (3) by means of a detecting device (9);
- taking account of the respectively detected measurement positions of the probe (3) when producing the picture (5) of the test area of the test object (1) ;
- determining an evaluation variable for detecting irregularities with regard to the respectively detected measurement positions within the measurement surface by means of the data processing device (7); and
- weighting with the aid of the evaluation variable each echo signal received in relation to the respectively detected measurement position for the production of the picture (5) by means of the data processing device (7) in such a way that the irregularities are compensated,
**characterized by** determining a local measurement density as evaluation variable, and weighting in such a way that echo signals of measurement positions (M) with large local measurement density are given less strong weightings less strong than echo signals of measurement positions with average or small measurement density.

2. Method according to Claim 1, **characterized by** determining the local measurement density from a respective number of detected measurement positions per unit area of the measurement surface, or per unit length of at least one scan line of the measurement surface.

3. Method according to Claim 1, **characterized by** determining the local measurement density by means of summing all of the reciprocals of all of the distances of a detected measurement position in relation to all other detected measurement positions within a prescribed first radius.

4. Method according to Claim 1, 2 or 3, **characterized by** weighting in such a way that echo signals of measurement positions are weighted in an inversely proportional fashion to the local measurement density.

5. Method according to Claim 1, 2, 3 or 4, **characterized by** weighting in such a way that echo signals of measurement positions with relatively large local measurement density are weighted with zero.

6. Method according to Claim 5, **characterized by** redetermining the local measurement density within a prescribed second radius around the measurement positions whose echo signals have been weighted with zero.

7. Method according to Claim 5 and 6, **characterized by** repeatedly omitting measurement positions weighted with zero, and redetermining the local measurement density as long as a prescribed minimum measurement density is not undershot.

8. Method according to one of the preceding claims, **characterized by** determining a homogeneous contribution of all subareas of the measurement surface as evaluation variable and weighting in such a way that the echo signals of measurement positions contribute as equally as possible to the picture (5).

9. Method according to one of the preceding claims, **characterized by** detecting the respective measurement position of the probe (16) upon emission of the ultrasonic signal and/or upon reception of the corresponding echo signal.

10. Device for ultrasonic testing of a test object (1), comprising:
a probe (3) which can be moved, in particular in freehand fashion, along a test object surface (2) and within a measurement surface comprising subareas, and measures by means of emitting ultrasonic pulses into the test object (1) and receiving respective echo signals corresponding to the emitted ultrasonic pulses;
a detecting device which detects a respective measurement position of the probe (3); and
a data processing device (7) which produces a picture (5) of a prescribed test area of the test object (1) on the basis of superposing and averaging amplitude values of the received echo signals, and which takes account of the respectively detected measurement positions of the probe (3) when producing the picture (5) of the test area of the test object (1);
wherein
by means of at least one evaluation variable for detecting irregularities with regard to the respectively detected measurement positions within the measurement surface the data processing device (7) weights each echo
signal received in relation to the respectively detected measurement position for the production of the picture (5) in such a way that the irregularities are compensated, **characterized in that** the data processing device (7) determines a local measurement density as evaluation variable and carries out weighting in such a way that echo signals of measurement positions (M) with large local measurement density are given less strong weightings than echo signals of measurement positions with average or small measurement density.

11. Device according to Claim 10, **characterized in that** the data processing device (7) determines the local measurement density from a respective number of detected measurement positions per unit area of the measurement surface, or per unit length of at least one scan line of the measurement surface.

12. Device according to either of Claims 10 and 11, **characterized in that** the data processing device (7) determines the local measurement density by means of summing all of the reciprocals of all the distances of a detected measurement position in relation to all other detected measurement positions within a prescribed first radius.

13. Device according to Claim 10, 11 or 12, **characterized in that** the data processing device (7) weights in such a way that echo signals of measurement positions are weighted in an inversely proportional fashion to the local measurement density.

14. Device according to Claim 10, 11, 12 or 13, **characterized in that** the data processing device (7) weights in such a way that echo signals of measurement positions with relatively large local measurement density are weighted with zero.

15. Device according to Claim 14, **characterized in that** the data processing device (7) redetermines the local measurement density within a prescribed second radius around the measurement positions whose echo signals have been weighted with zero.

16. Device according to Claim 14 and 15, **characterized in that** the data processing device (7) removes measurement positions weighted with zero, and redetermines the local measurement density as long as a prescribed minimum measurement density is not undershot.

17. Device according to one of the preceding Claims 9 to 16, **characterized in that** the data processing device (7) determines a homogeneous contribution of all subareas of the measurement surface as evaluation variable and weights in such a way that the echo signals of measurement positions contribute as equally as possible to the picture (5).

18. Device according to one of the preceding Claims 10 to 17, **characterized in that** the detecting device detects the respective measurement position of the probe (16) upon emission of the ultrasonic signal and/or upon reception of the corresponding echo signal.

## Revendications

1. Procédé de contrôle par ultrasons d'un objet (1) à contrôler, comprenant les stades :
- déplacement - notamment à mainlevée - d'une tête (3) de contrôle le long d'une surface (2) de l'objet à contrôler et mesure effectuée au sein d'une surface (11) de mesure, constituée de sous-régions, au moyen de l'émission d'impulsions ultrasonores dans l'objet (1) à contrôler, à l'aide de la tête (3) de contrôle et réception, au moyen de la tête (3) de contrôle, de signaux d'écho correspondant chacun aux impulsions ultrasonores émises;
- établissement, au moyen d'un dispositif (7) de traitement de données d'une reproduction (5) d'une région à contrôler donnée à l'avance de l'objet (1) à contrôler, sur la base d'une superposition et d'une formation de la moyenne de valeurs d'amplitude des signaux d'écho reçus;
- détection d'une position (M) de mesure respective de la tête (3) de contrôle au moyen d'un dispositif (9) de détection;
- prise en compte des positions de mesure détectées de la tête (3) de contrôle lors de la production de la reproduction (5) de la région à contrôler de l'objet (1) à contrôler;
- détermination, au moyen du dispositif (7) de traitement de données d'une grandeur d'évaluation pour détecter des irrégularités en ce qui concerne les positions de mesure détectées respectivement dans la surface de mesure;
- pondération exécutée à l'aide de la grandeur d'évaluation de chaque signal d'écho reçu à la position de mesure détectée pour établir la reproduction (5) au moyen du dispositif (7) de traitement de données, de manière à compenser les irrégularités,
**caractérisé par**
la détermination d'une densité de mesure locale, comme grandeur d'évaluation et pondération, de manière à pondérer moins fortement des signaux locaux de position (M) de mesure à grande densité de mesure locale que des signaux locaux de position de mesure à densité de mesure moyenne ou petite.

2. Procédé suivant la revendication 1
**caractérisé par**
la détermination de la densité de mesure locale à partir de l'une d'un certain nombre de positions de mesure détectées par surface unitaire de la surface de mesure ou par longueur unitaire d'au moins une ligne de balayage à la surface de mesure.

3. Procédé suivant la revendication 1,
**caractérisé par**
la détermination de la densité de mesure locale au moyen d'une sommation de toutes les valeurs inverses de toutes les distances d'une position de mesure détectée à toutes les positions de mesure détectées dans un premier rayon donné à l'avance.

4. Procédé suivant la revendication 1, 2 ou 3,
**caractérisé par**
la pondération, de manière à pondérer des signaux d'écho de position de mesure, de manière inversement proportionnelle à la densité de mesure locale.

5. Procédé suivant la revendication 1, 2, 3 ou 4,
**caractérisé par**
la pondération, de manière à pondérer à zéro des signaux d'écho de position de mesure à densité de mesure locale relativement très grande.

6. Procédé suivant la revendication 5,
**caractérisé par**
la détermination renouvelée de la densité de mesure locale dans un deuxième rayon donné à l'avance autour des positions de mesure, dont les signaux d'écho ont été pondérés à zéro.

7. Procédé suivant la revendication 5 et 6,
**caractérisé par**
le fait de négliger de manière répétée des positions de mesure pondérées à zéro et de déterminer à nouveau la densité de mesure locale, tant que l'on ne passe pas en dessous d'une densité de mesure minimum donnée à l'avance.

8. Procédé suivant l'une des revendications précédentes,
**caractérisé par**
la détermination d'une contribution homogène de toutes les sous-régions de la surface de mesure, comme grandeur d'évaluation, et la pondération, de manière à ce que les signaux d'écho de position de mesure contribuent, autant que possible, uniformément à la reproduction (5).

9. Procédé suivant l'une des revendications précédentes, **caractérisé par** la détection de la position de mesure respective de la tête (16) de contrôle lors de l'émission des signaux ultrasonores et/ou lors de la réception du signal d'écho correspondant.

10. Système de contrôle par ultrasons d'un objet (1) à contrôler, comportant :
une tête (3) de contrôle, qui est mobile, notamment à mainlevée, le long d'une surface (2) de l'objet à contrôler et, au sein d'une surface de mesure, constituée de sous-régions et qui mesure, au moyen de l'émission d'impulsions ultrasonores dans l'objet (1) à contrôler et de la réception de signaux d'écho correspondant aux impulsions ultrasonores émises;
un dispositif de détection, qui détecte une position de mesure de la tête (3) de contrôle;
un dispositif (7) de traitement de données, qui établit une reproduction (5) d'une région à contrôler donnée à l'avance de l'objet (1) à contrôler, sur la base d'une superposition et de la formation d'une moyenne de valeurs d'amplitude des signaux d'écho reçus;
et qui prend en compte les positions de mesure détectées de la tête (3) de contrôle lors de la production de la reproduction (5) de la région à contrôler de l'objet (1) à contrôler;
dans lequel le dispositif (7) de traitement de données pondère, au moyen d'au moins une grandeur d'évaluation, pour détecter des irrégularités concernant les positions de mesure détectées dans la surface de mesure, chaque signal d'écho reçu à la position de mesure détectée, pour l'établissement de la reproduction (5), de manière à compenser les irrégularités,
**caractérisé en ce que**
le dispositif (7) de traitement de données détermine une densité de mesure locale comme grandeur d'évaluation et effectue une pondération, de manière à pondérer moins fortement des signaux d'écho de position (M) de mesure à grande densité de mesure locale que des signaux d'écho de position de mesure à densité de mesure moyenne ou petite.

11. Système suivant la revendication 10,
**caractérisé en ce que**
le dispositif (7) de traitement de données détermine la densité de mesure locale à partir d'un nombre de positions de mesure détectées, par surface unitaire de la surface de mesure ou par longueur unitaire d'au moins une ligne de balayage à la surface de mesure.

12. Système suivant l'une des revendications 10 ou 11,
**caractérisé en ce que**
le dispositif (7) de traitement de données détermine la densité de mesure locale au moyen d'une sommation de toutes les valeurs inverses de toutes les distances d'une position de mesure détectée à toutes les autres positions de mesure détectées dans un premier rayon donné à l'avance.

13. Système suivant la revendication 10, 11 ou 12,
**caractérisé en ce que**
le dispositif (7) de traitement de données est pondéré, de manière à pondérer des signaux d'écho de position de mesure, de manière inversement proportionnelle à la densité de mesure locale.

14. Système suivant la revendication 10, 11, 12 ou 13,
**caractérisé en ce que**
le dispositif (7) de traitement de données pondère, de manière à pondérer à zéro des signaux d'écho de position de mesure à densité de mesure locale relativement très grande.

15. Système suivant la revendication 14,
**caractérisé en ce que**
le dispositif (7) de traitement de données détermine à nouveau la densité de mesure locale dans un deuxième rayon donné à l'avance autour des positions de mesure, dont les signaux d'écho ont été pondérés à zéro.

16. Système suivant la revendication 14 et 15,
**caractérisé en ce que**
le dispositif (7) de traitement de données élimine des positions de mesure pondérées à zéro et détermine à nouveau la densité de mesure locale, tant que l'on n'est pas passé en dessous d'une densité de mesure minimum donnée à l'avance.

17. Système suivant l'une des revendications 9 à 16,
**caractérisé en ce que** le dispositif (7) de traitement de données détermine une contribution homogène de toutes les sous-régions de la surface de mesure, comme grandeur d'évaluation, et la pondère, de manière à ce que les signaux d'écho de position de mesure contribuent le plus possible uniformément à la reproduction (5).

18. Système suivant l'une des revendications précédentes 10 à 17,
**caractérisé en ce que** le dispositif de détection détecte la position de mesure respective de la tête (16) de contrôle lors de l'émission du signal ultrasonore et/ou lors de la réception du signal d'écho correspondant.
